# EUROPÄISCHE PATENTSCHRIFT

(11) **EP 2 519 371 B1**
(45) Veröffentlichungstag und Bekanntmachung des Hinweises auf die Patenterteilung: **05.07.2017**
(21) Anmeldenummer: 10787069.3
(22) Anmeldetag: 24.11.2010
(51) Int. Cl.: B23B 51/02

(54) **GESTEINSBOHRWERKZEUG ZUR DREH-SCHLAGENDEN BEARBEITUNG VON BETON, GESTEIN, MAUERWERK UND DERGLEICHEN MATERIALIEN**
ROCK DRILLING TOOL FOR THE ROTATIONAL PERCUSSIVE MACHINING OF CONCRETE, ROCK, MASONRY AND SUCH MATERIALS
OUTIL PERFORATEUR DE ROCHE POUR LA PERFORATION ROTO-PERCUTANTE DE BÉTON, DE ROCHE, DE MAÇONNERIE ET DE MATÉRIAUX ÉQUIVALENTS

(30) Priorität: 30.12.2009 DE 102009060857
(43) Veröffentlichungstag der Anmeldung: 07.11.2012
(73) Patentinhaber: Robert Bosch GmbH, 70442 Stuttgart (DE)
(72) Erfinder: SCHWARZ, Gerhard, 88273 Fronreute (DE)
(86) Internationale Anmeldenummer: PCT/EP2010/068111
(87) Internationale Veröffentlichungsnummer: WO 2011/080012

(56) Entgegenhaltungen:
- DE-A1- 10 133 948
- DE-U1-202005 006 117
- JP-A- 2007 185 719
- US-A- 2 876 995
- US-A- 5 664 914

## Beschreibung

Die Erfindung betrifft ein Gesteinsbohrwerkzeug gemäß dem Oberbegriff des Anspruchs 1 zur dreh-schlagenden Bearbeitung von Beton, Gestein, Mauerwerk und dergleichen Materialien.

### Stand der Technik

Ein solches Gesteinsbohrwerkzeug ist aus der US-A-2876995 bekannt.

Aus der DE 102 08 630 A1 ist ein Gesteinsbohrwerkzeug zur dreh-schlagenden Bearbeitung von Beton, Gestein, Mauerwerk und dergleichen Materialien bekannt, welches einen Bohrerkopf und eine zwischen dem Bohrerkopf und einem Schaft angeordnete Wendel umfasst, wobei der Bohrerkopf einen Schneidkörper umfasst, wobei sich der Schneidkörper ununterbrochen über einen Nenndurchmesser des Gesteinsbohrwerkzeugs erstreckt, wobei der Schneidkörper, in Wirkrichtung des Gesteinsbohrwerkzeugs betrachtet, einen unteren Sockelbereich und einen oberen Kopfbereich umfasst, wobei sich der Kopfbereich über den Nenndurchmesser des Gesteinsbohrwerkzeugs erstreckt, und wobei eine Spitze des Schneidkörpers von einer Längsmittelachse des Bohrwerkzeugs durchlaufen wird.

Der Erfindung liegt die Aufgabe zu Grunde ein Gesteinsbohrwerkzeug zu schaffen, dessen Abtragsleistung erhöht ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

### Offenbarung der Erfindung

Das erfindungsgemäße Gesteinsbohrwerkzeug weist einen Schneidkörper auf, welcher in seinem Kopfbereich als Pyramide oder als Pyramidenstumpf ausgebildet ist, wobei sich deren bzw. dessen Grundfläche über den Nenndurchmesser des Gesteinsbohrwerkzeugs erstreckt, und Pyramidenkanten aufweist, welche von der Grundfläche zu einer Spitze der Pyramide bzw. des Pyramidenstumpfs verlaufen, wobei zwischen den Pyramidenkanten Seitenflächen liegen und wobei wenigstens eine Seitenfläche als Wölbung ausgebildet ist. Ein derartiges Gesteinsbohrwerkzeug ist durch die Zahl der Seitenflächen und/oder die Zahl der Wölbungen und/oder die Formgebung der einzelnen Wölbungen individuell auf den Einsatzzweck anpassbar. Kern der Erfindung ist somit ein Gesteinsbohrwerkzeug, welches bei einheitlicher Grundgeometrie individuell auf das im dreh-schlagenden Betrieb zu durchbohrende Material anpassbar ist.

Die Erfindung sieht weiterhin vor, die Wölbung insbesondere als konkave Mulde auszubilden oder die Wölbung insbesondere als konvexe Nase auszubilden. Durch eine Ausbildung der Wölbung als Mulde wird der Schneidkörper verschlankt und geschärft und zeigt sowohl ein bessere Eindringleistung beim Schlag als auch eine erhöhte Abschälleistung beim Drehen. Durch eine Ausbildung der Wölbung als Nase wird insbesondere eine erhöhte Zertrümmerungsleistung des Gesteinsbohrers beim Schlag erreicht.

Weiterhin sieht die Erfindung vor, wenigstens zwei benachbarte Seitenflächen des Kopfbereichs insbesondere als Mulden auszubilden oder insbesondere als Nasen auszubilden oder insbesondere als Nase und Mulde auszubilden. Bei der Ausbildung von zwei benachbarten Mulden entsteht im Bereich der eingeschlossenen Pyramidenkante ein Keil mit einer Spanfläche und einer Freifläche. Durch die Form der Mulden sind somit ein negativer Spanwinkel und ein Freiflächenwinkel dieses Keils auf die Anforderungen anpassbar. Durch die Ausbildung von zwei benachbarten Nasen ist eine hohe Zertrümmerungsleistung erzielbar, wobei es insbesondere auch vorgesehen ist, die in der Drehrichtung des Gesteinsbohrwerkzeugs nachfolgende Nase für die Zertrümmerung von Material zu gestalten, welches bereits durch die in der Drehrichtung voraneilende Nase bearbeitet wurde. Durch die Ausbildung von zwei benachbarten Seitenflächen als Nase und Mulde lassen sich die oben erwähnten Vorteile kombinieren.

Die Erfindung sieht auch vor, alle Seitenflächen des Kopfbereichs insbesondere als Mulden auszubilden oder insbesondere als Nasen auszubilden oder insbesondere abwechselnd als Nase und Mulde auszubilden. Hierdurch lassen sich die oben erwähnten Vorteile in größerem Umfang nutzen.

Erfindungsgemäß ist es vorgesehen, im Bereich der zwischen zwei Mulden liegenden Pyramidenkante des Kopfbereichs einen Keil zu bilden, dessen Keilflächen durch Oberflächenabschnitte der benachbarten Mulden gebildet sind, wobei ein Keilwinkel des Keils kleiner ist als ein Keilwinkel eines Keils, welcher durch zwei benachbarte ebenen Seitenflächen gebildet ist. Durch eine derartige Ausbildung der Pyramide bzw. des Pyramidenstumpfs im Bereich einer Pyramidenkante ist durch die Formgebung der Mulden über die Länge der Pyramidenkante auch eine Veränderung des Keilwinkels möglich. Insbesondere ist es vorgesehen, dass der Keilwinkel in radialer Richtung zu der Längsachse hin zunimmt, um den Keil zur Spitze des Kopfbereichs hin widerstandfähiger gegen extreme Schlagbelastungen zu machen.

Weiterhin sieht die Erfindung vor, eine in Drehrichtung des Gesteinsbohrwerkzeugs vor der Pyramidenkante liegende Mulde als Spanflächenmulde auszubilden, wobei eine in Drehrichtung des Gesteinsbohrwerkzeugs hinter der Pyramidenkante liegende Mulde als Freiflächenmulde ausgebildet ist und wobei die Spanflächenmulde zu der Pyramidenkante hin stärker ansteigt als die Freiflächenmulde. Hierdurch wird im Bereich der Pyramidenkante eine für den dreh-schlagenden Bohrbetrieb optimierte Schneide geschaffen.

Die Erfindung sieht auch vor, eine Grundfläche der Pyramide insbesondere als Vieleck mit einer geraden Eckenzahl und insbesondere als Viereck oder als Sechseck auszubilden oder insbesondere als Vieleck mit einer ungeraden Eckenzahl und insbesondere als Dreieck oder Fünfeck auszubilden. Bei einer derartigen Ausbildung der Grundflächen lassen sich sowohl Gesteinsbohrer mit kleinen Durchmessern von 5 mm bis 12 mm als auch Gesteinsbohrer mit Durchmessern > 12 mm gestalten.

Die Erfindung sieht auch vor, wenigstens eine der Mulden in Richtung eines Schwerpunkts des Kopfbereichs des Schneidkörpers zu vertiefen. Hierdurch wird dem Schneidkörper eine schlanke, für ein tiefes Eindringen in das zu bearbeitende Material geeignete Form gegeben.

Gemäß der Erfindung ist der Schneidkörper insbesondere als Schneidplatte ausgebildet ist, welche sich über den Nenndurchmesser des Gesteinsbohrwerkzeugs erstreckt, oder ist der Schneidkörper insbesondere als Vollhartmetallkopf ausgebildet ist, welcher sich über den Nenndurchmesser des Gesteinsbohrwerkzeugs erstreckt. Bei einer Ausbildung des Schneidkörper als Schneidplatte ist eine kostengünstige Herstellung von Gesteinsbohrern möglich, da für die Schneidplatte im Vergleich zum Vollkopf wenig Material erforderlich ist und da sich die Schneidplatte fertigungstechnisch einfach zwischen zwei Fortsätzen der Wendel montieren lässt. Bei einer Ausbildung des Schneidkörpers als Vollkopf bzw. Vollhartmetallkopf ist eine gezieltere Führung des Bohrkleins in die Abfuhrnuten der Wendel möglich.

Weiterhin sieht die Erfindung für wenigstens eine der Pyramidenkanten zwischen ihrem Fußpunkt und der Spitze der Pyramide bzw. des Pyramidenstumpfs einen Verlauf vor, bei welchem die Pyramidenkante auf wenigstens einem Abschnitt bei gleich bleibender Steigung zu der Längsachse insbesondere gebogen und/oder insbesondere geknickt verläuft. Durch einen derartigen Verlauf der Pyramidenkante in einem gleich bleibenden Winkel zu der Längsachse des Gesteinsbohrwerkzeugs ist es zum Beispiel möglich, die Pyramidenkante als sichelförmig gebogene, innere Schneidkante auszubilden, welche sich in Draufsicht auf den Bohrerkopf bzw. in Richtung der Längsachse des Gesteinsbohrwerkzeugs betrachtet auf einer gebogenen Bahn der Spitze der Pyramide bzw. des Pyramidenstumpfs annähert.

Die Erfindung sieht weiterhin für wenigstens eine der Pyramidenkanten zwischen ihrem Fußpunkt und der Spitze der Pyramide bzw. des Pyramidenstumpfs einen Verlauf vor, bei welchem die Pyramidenkante der Pyramide auf wenigstens einem Abschnitt insbesondere mit zunehmender Steigung zu der Längsachse oder insbesondere mit abnehmender Steigung zu der Längsachse oder insbesondere mit sprunghafter Änderung der Steigung zu der Längsachse verläuft. Durch einen derartigen Verlauf der Pyramidenkante mit abnehmendem Winkel zu der Längsachse des Gesteinsbohrwerkzeugs oder mit zunehmendem Winkel zur Längsachse des Gesteinsbohrwerkzeugs oder mit sprunghaft zunehmendem oder abnehmendem Winkel zur Längsachse des Gesteinsbohrwerkzeugs ist es zum Beispiel möglich, bei zunehmendem Winkel eine buckelförmige, stabile Zentrierspitze oder bei abnehmendem Winkel eine spitze, sehr aggressive Zentrierspitze auszubilden.

Erfindungsgemäß ist auch eine Überlagerung der in den beiden vorhergehenden Abschnitten beschrieben Verläufe der Pyramidenkanten vorgesehen. Hierbei ist es insbesondere vorgesehen, wenigstens zwei, spiegelsymmetrisch zu der Längsmittelachse ausgebildete Pyramidenkanten gebogen und mit abnehmender Steigung zu der Längsachse auszubilden. Bei einem derartigen Verlauf der Pyramidenkanten entsteht eine stabile Spitze, welche als Schlagkuppe ausgebildet ist.

Schließlich sieht die Erfindung auch vor, die Wölbung insbesondere durch zwei ebene Flächen auszubilden oder insbesondere durch mehrere ebene Flächen auszubilden. Mit derartigen, einfachen Geometrien lassen sich die erfindungsgemäßen Vorteile einfach und kostengünstig erreichen.

Schließlich ist es erfindungsgemäß auch vorgesehen, die Wölbung zwischen benachbarten Pyramidenkanten knickfrei und gewölbt auszubilden. Bei derartig ausgebildeten Gesteinsbohrwerkzeugen lässt sich der Schneidkörper nach dem Gebrauch einfach reinigen, da der Schneidkörper frei von zurückspringenden Kanten ist. Durch die Möglichkeit einer raschen und erfolgreichen Reinigung des Schneidkörpers des Gesteinsbohrers wird dessen Nutzer zur Pflege und Überwachung des Gesteinsbohrers animiert. Hierdurch wird letztlich Unfällen vorgebeugt und hierdurch wird weiterhin eine gleich bleibende, hohe Qualität der Bohrungen sichergestellt.

Im Sinne der Erfindung werden unter einem Schneidkörper sowohl Schneidplatten verstanden, welche zwischen Fortsätzen der Wendel eingebettet sind und mit diesen den Bohrerkopf bilden, als auch Vollhartmetallköpfe verstanden, welche stumpf auf der Wendel befestigt sind und den vollständigen Bohrerkopf bilden. Isoliert eingesetzte Zentrierspitzen sind im Sinne der Erfindung keine Schneidkörper.

Im Sinne der Erfindung ist eine Mulde eine konkave Fläche, welche zwischen zwei Pyramidenkanten verläuft. Im Sinne der Erfindung ist eine Nase eine konvexe Fläche, welche zwischen zwei Pyramidenkanten verläuft.

Weitere Einzelheiten der Erfindung werden in der Zeichnung anhand von schematisch dargestellten Ausführungsbeispielen beschrieben. Hierbei zeigen:
- Figur 1a bis 1e:: eine erste Ausführungsvariante eines erfindungsgemäßen Gesteinsbohrwerkzeugs;
- Figur 2a bis 2e:: den Schneidkörper der in den Figuren 1a bis 1e gezeigten ersten Ausführungsvariante und
- Figur 3a bis 8e:: sechs weitere Ausführungsvarianten von Schneidkörpern für erfindungsgemäße Gesteinsbohrwerkzeuge.

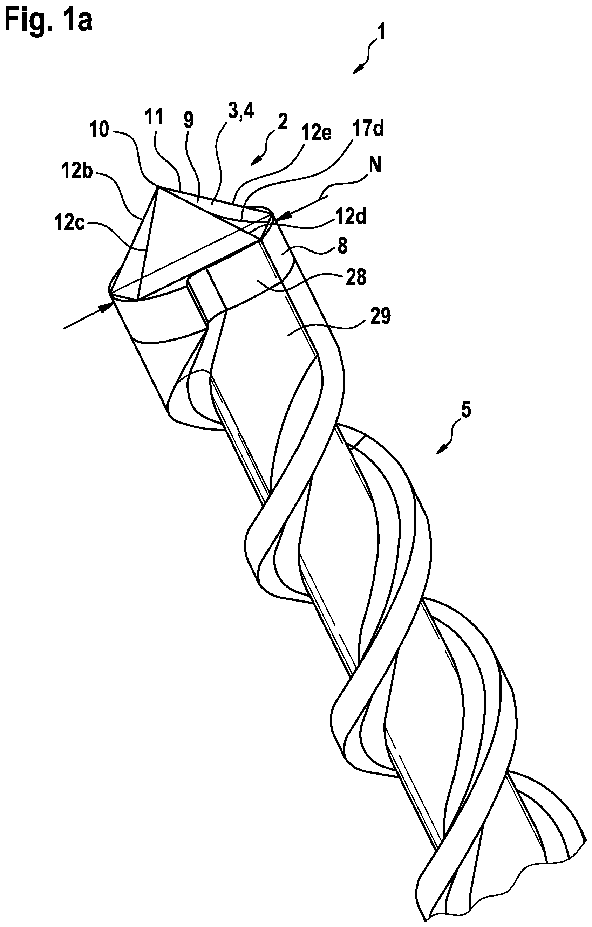

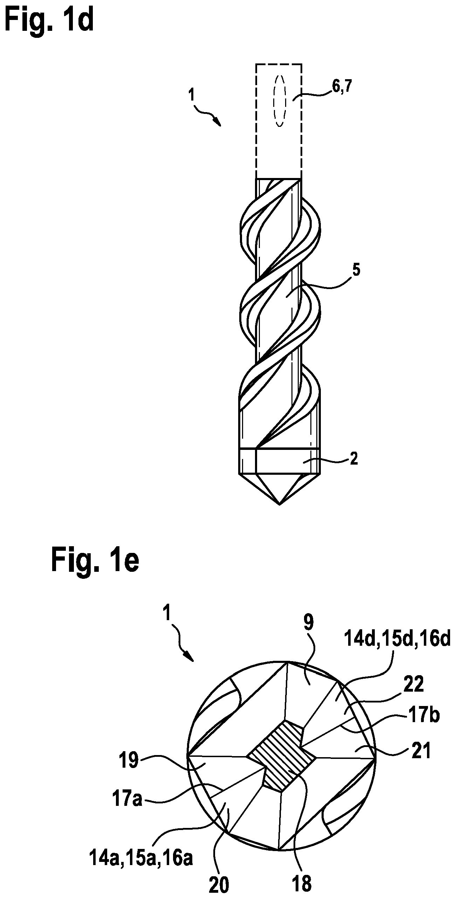

In der Figur 1a ist in perspektivischer Ansicht ein Gesteinsbohrwerkzeug 1 gezeigt. Das Gesteinsbohrwerkzeug 1 weist einen Bohrerkopf 2 auf, welcher einen Schneidkörper 3 umfasst. Der Schneidkörper 3 ist als Vollhartmetallkopf 4 ausgebildet und erstreckt sich über einen Nenndurchmesser N des Gesteinsbohrwerkzeugs 1. Der Vollhartmetallkopf 4 sitzt auf einer Wendel 5, welche - wie in der Figur 1d schematisch angedeutet - in einen Schaft 6 übergeht. Der Schaft 6 ist als so genannter SDS-Einspannschaft 7 ausgebildet.

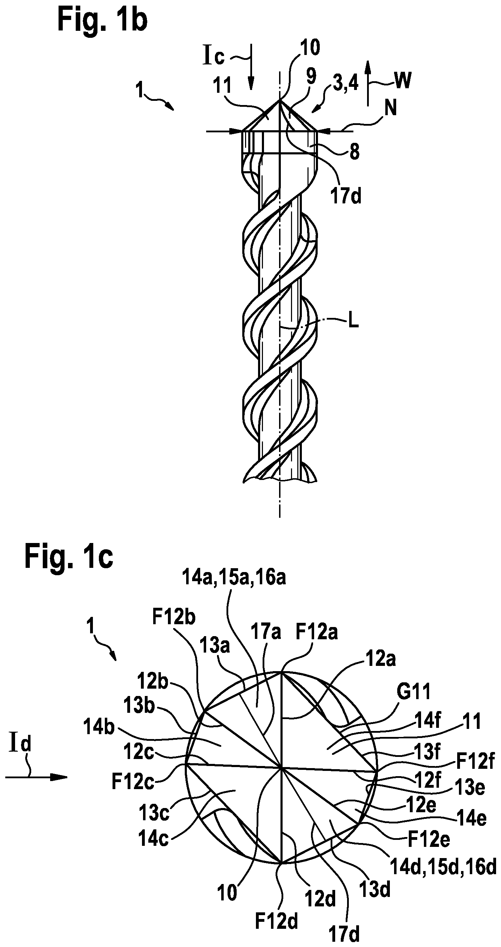

In der Figur 1b ist eine Seitenansicht auf den in der Figur 1 gezeigten Abschnitt des Gesteinsbohrwerkzeugs 1 gezeigt. Der Schneidkörper 3 umfasst, in eine Wirkrichtung W des Gesteinsbohrwerkzeugs 1 betrachtet, einen unteren Sockelbereich 8 und einen oberen Kopfbereich 9. Sowohl der Sockelbereich 8 als auch der Kopfbereich 9 erstrecken sich über den Nenndurchmesser N des Gesteinsbohrwerkzeugs 1. Eine Spitze 10 des Schneidkörpers 3 wird von einer Längsachse L des Gesteinsbohrwerkzeugs 1 durchlaufen. Der Kopfbereich 9 ist als Pyramide 11 ausgebildet.

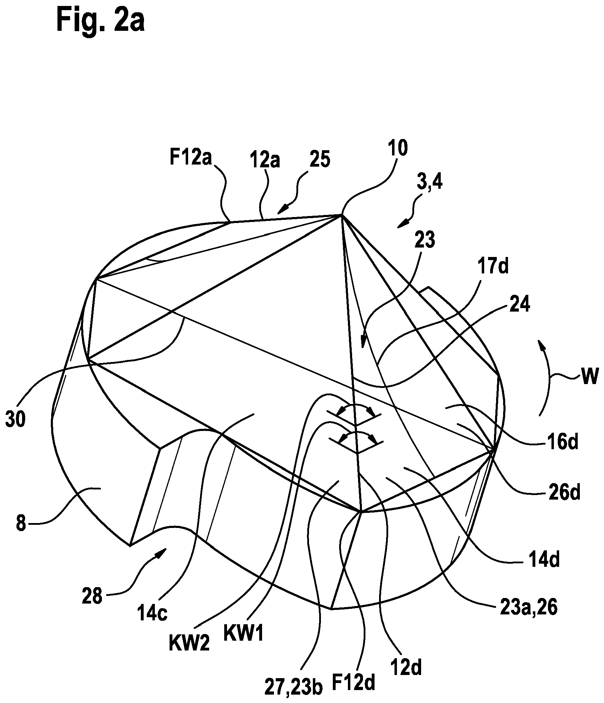

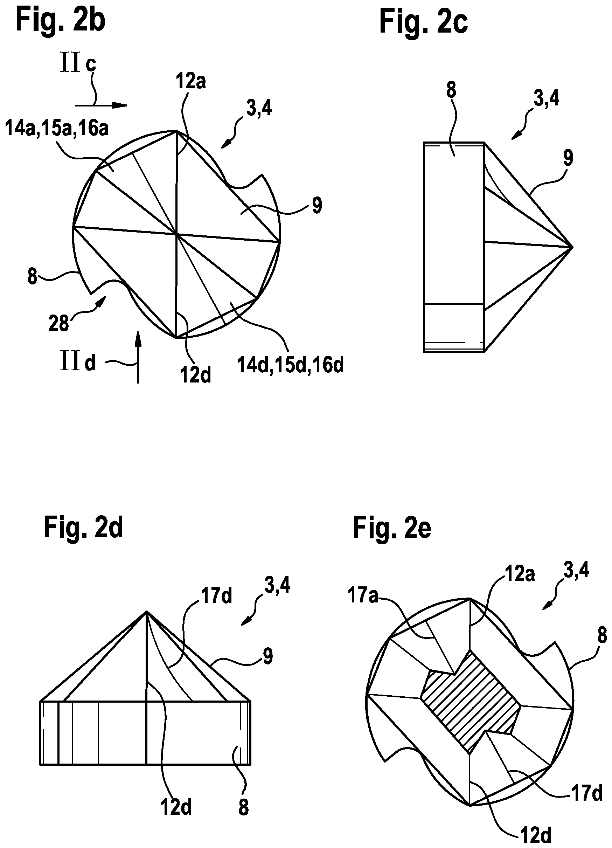

In der Figur 1c ist eine Draufsicht auf die Darstellung der Figur 1b aus einer Pfeilrichtung Ic gezeigt. In dieser Ansicht ist eine sechseckige Grundfläche G11 erkennbar. Von der Grundfläche G11 laufen sechs Pyramidenkanten 12a bis 12f zu der Spitze 10 der Pyramide 11. Fußpunkte F12a bis F12f der Pyramidenkanten 12a bis 12f sind jeweils durch Grundkanten 13a bis 13f der Pyramide 11 verbunden. Zwischen den Pyramidenkanten 12a bis 12f liegen sechs Seitenflächen 14a bis 14f. Zwei dieser Seitenflächen 14a bis 14f sind als Wölbungen 15a und 15d in Form von Mulden 16a und 16d ausgebildet, welche in den Schneidköper 3 hinein konkav gewölbt sind. Durch Hilfslinien 17a und 17d ist in den Figuren 1a bis 1e bzw. 2a bis 2e der konkave, nach innen geknickte Verlauf der Seitenflächen 14a und 14d angedeutet.

In der Figur 1d ist das Gesteinsbohrwerkzeug 1 aus einer in der Figur 1c angedeuteten Seitenansicht aus einer Pfeilrichtung Id gezeigt. Wie oben erwähnt, zeigt die Figur 1 d das Gesteinsbohrwerkzeug 1 vollständig mit Schaft 6, Wendel 5 und Bohrerkopf 2.

Die Figur 1e zeigt eine weitere Draufsicht auf das Gesteinsbohrwerkzeug, wobei das Gesteinsbohrwerkzeug 1 in seinem Kopfbereich 9 geschnitten dargestellt ist. Dort wo die Hilfslinien 17a und 17b mit einer Schnittfläche 18 zusammentreffen ist der eingeknickte Verlauf der Seitenflächen 14a und 14d erkennbar. Prinzipiell sind die Mulden 16a und 16d jeweils durch zwei gekippt zueinander stehende Muldenteilflächen 19, 20 und 21, 22 gebildet.

In der Figur 2a ist der aus den Figuren 1a bis 1e bereits bekannte Schneidkörper 3 in Einzeldarstellung und vergrößert gezeigt. Im Bereich der Pyramidenkante 12d ist durch die aufeinander treffenden Seitenflächen 14c und 14d ein Keil 23 gebildet, welcher einen schematisch eingezeichneten Keilwinkel KW1 aufweist. Hierbei bilden die Seitenflächen 14c und 14d, welche als Mulde 16d und als plane Seitenfläche 14c ausgebildet sind, Keilflächen 23a und 23b. Der Keilwinkel KW1 ist kleiner als ein schematisch eingezeichneter Keilwinkel KW2, welchen die Seitenfläche 14c mit einer abweichend von der Darstellung plan verlaufenden Seitenfläche 14d bilden würde. Somit bildet der Keil 23 eine erste Schneide 24 mit Schneid- und Schlagkantenfunktion, welche von dem Fußpunkt F12d der Pyramide 11 zu der Spitze 10 der Pyramide 11 verläuft. Hierbei bildet die Keilfläche 23a eine Spanfläche 26 der Schneide 24 und hierbei bildet die Keilfläche 23b eine Freifläche 27 der Schneide 24. Die Spanfläche 26 ist Teil der als Spanflächenmulde 26d wirkenden Mulde 16d. Betrachtet man zum Vergleich eine Pyramide mit ausschließlich planen Seitenflächen, dann führt die Ausbildung der Seitenfläche 14d als Mulde 16d auch zu einer betragsmäßigen Verkleinerung eines negativen Spanwinkels der Schneide 24 und steigert somit das Eindringvermögen und die Abschälleistung des erfindungsgemäßen Gesteinsbohrwerkzeugs. Im Sockelbereich 8 des Schneidkörpers 3 ist entgegen einer Drehrichtung w vor der Schneide 23 ein Rücksprung 28 ausgebildet, durch welchen das von der Schneide abgeschälte und zertrümmerte Material in eine Abfuhrnut 29 - siehe Figur 1a - der Wendel 5 abtransportiert wird. Die zu der Pyramidenkante 12d gemachten Ausführungen treffen analog auch auf die Pyramidenkante 12a zu. Hier ist entsprechend eine zweite Schneide 25 mit Schneid- und Schlagfunktion gebildet, welche von einem Fußpunkt F12a zu der Spitze 10 verläuft. Eine in der Figur 2a und der Figur 1 a sichtbare Diagonale 30 ist ohne Bedeutung und stellt lediglich eine zeichnerische Hilfslinie dar. Die übrigen Pyramidenkanten 12b, 12c, 12f und 12d wirken ebenfalls als Schneiden, wobei bei diesen im Vergleich zu den Pyramidenkanten 12a und 12d eine Schlagkantenfunktion im Vordergrund steht.

Die Figuren 2b bis 2e zeigen in vergrößerter Darstellung Einzelansichten des Schneidkörpers 3.

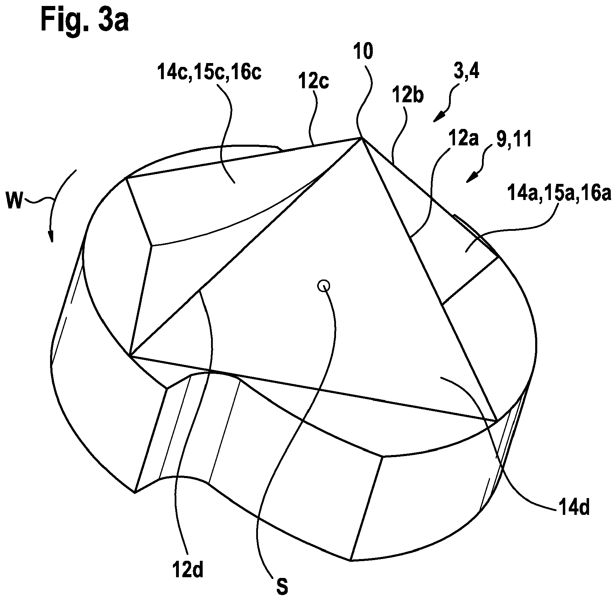

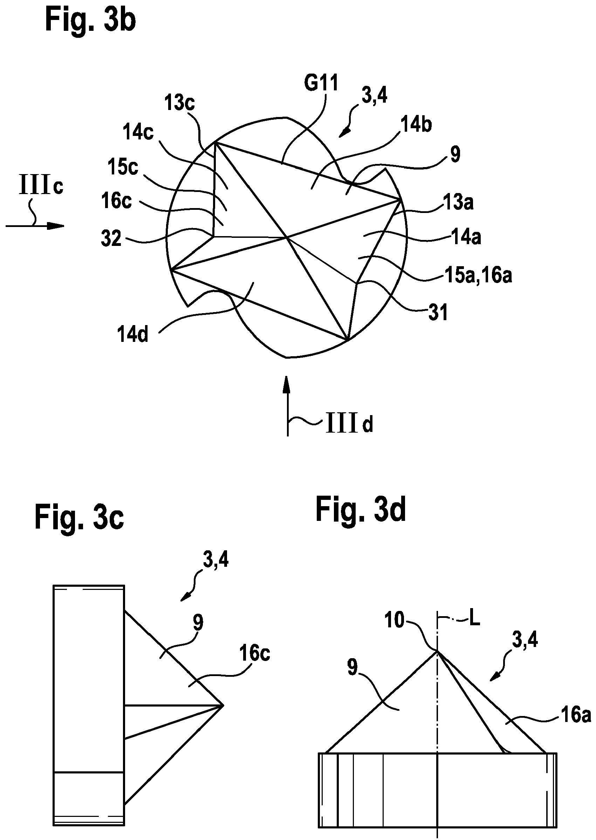

In den Figuren 3a bis 8a sind sechs weitere Ausführungsvarianten von Schneidkörpern 3 bzw. Vollhartmetallköpfen 4 für erfindungsgemäße Gesteinsbohrwerkzeuge dargestellt. Die mit a benannten Figuren zeigen jeweils eine perspektivische Ansicht des Schneidkörpers, die mit b benannten Figuren zeigen jeweils eine Draufsicht auf den Schneidkörper, die mit c und d benannten Figuren zeigen jeweils Seitenansichten auf den Schneidkörper entsprechend den Angaben in der mit b benannten Figur. Die mit e benannten Figuren zeigen jeweils eine weitere Draufsicht auf den Schneidkörper, wobei dieser in seinem Kopfbereich 9 geschnitten dargestellt ist. In dem Kopfbereich 9 sind die Schneidkörper 3 als Gittermodelle dargestellt, bei welchen auch verdeckte Kanten als durchgezogene Linien abgebildet sind und eine Längsachse L eine Spitze 10 durchläuft.

Der in den Figuren 3a bis 3e gezeigte Schneidkörper 3 weist als Kopfbereich 9 eine Pyramide 11 mit einer Grundfläche G11 auf, welche als Viereck ausgebildet ist. Von vier Seitenflächen 14a bis 14d sind zwei gegenüberliegende Seitenflächen 14a und 14c mit Wölbungen 15a und 15c in Form von Mulden 16a und 16c ausgebildet. Hierbei sind die Seitenflächen 14a und 14c so stark in Richtung eine Schwerpunkts S des Kopfbereichs 9 des Schneidkörpers 3 gewölbt, dass Grundkanten 13a und 13c jeweils einen Knick 31 bzw. 32 aufweisen. Im dreh-schlagenden Betrieb wirkt der Schneidkörper 3 mit vier Pyramidenkanten 12a bis 12d auf eine zu bearbeitendes Material ein.

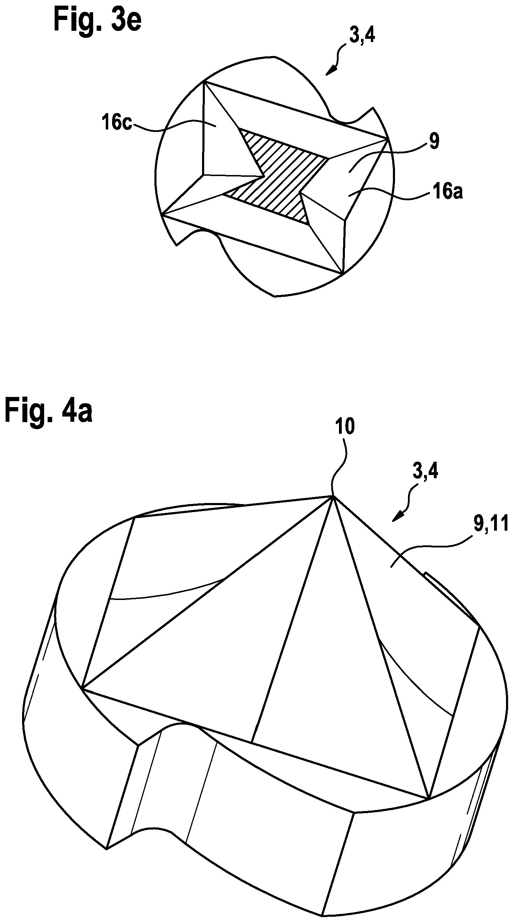

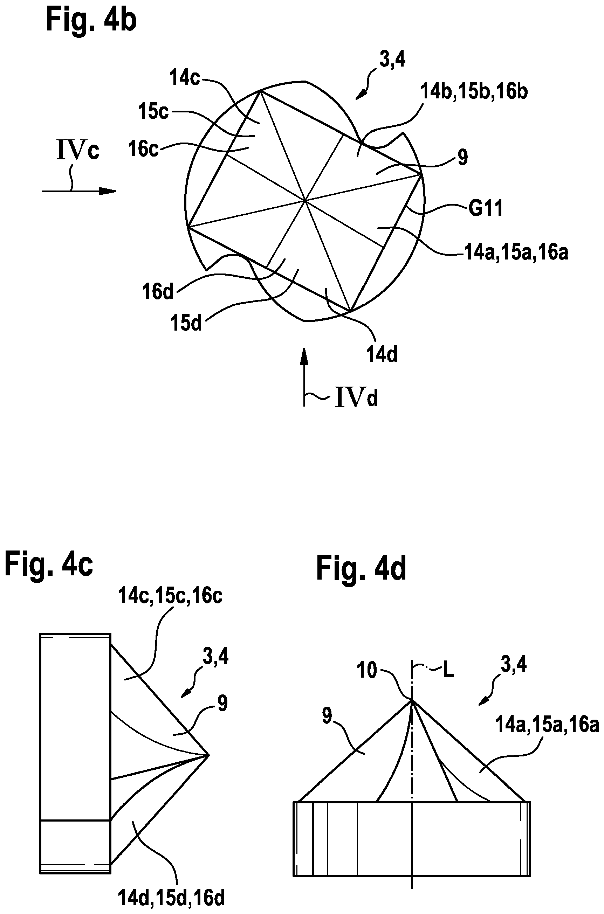

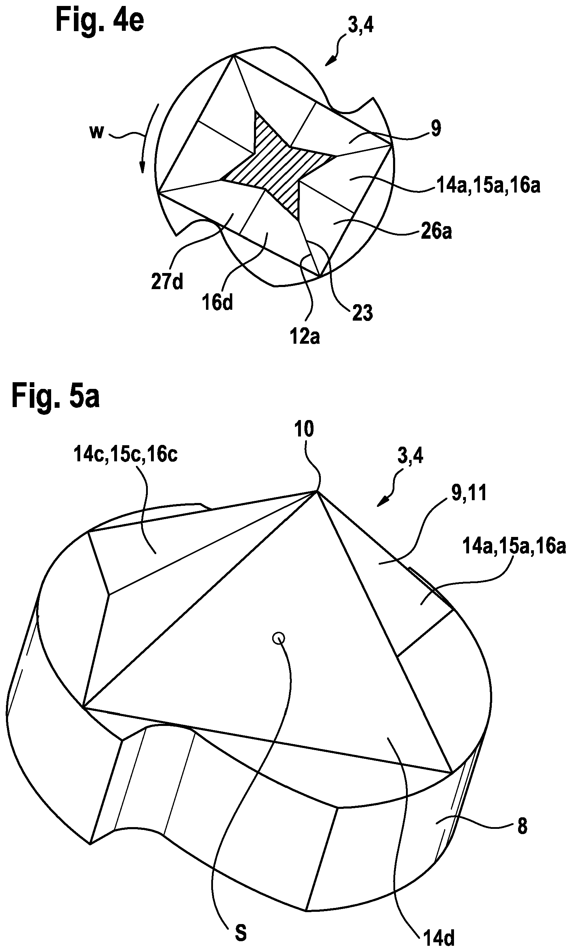

Der in den Figuren 4a bis 4e gezeigte Schneidkörper 3 weist als Kopfbereich 9 eine Pyramide 11 mit einer Grundfläche G11 auf, welche ebenfalls als Viereck ausgebildet ist. Alle vier Seitenflächen 14a bis 14d sind mit Wölbungen 15a bis 15d in Form von Mulden 16a bis 16d ausgebildet. In Bezug auf einen Keil 23, welcher im Bereich einer Pyramidenkante 12a gebildet ist, übernimmt die Mulde 16a die Funktion einer Spanflächenmulde 26a und übernimmt die Mulde 16d die Funktion einer Freiflächenmulde 27d. Entsprechendes gilt für die weiteren drei Pyramidenkanten 12b, 12c und 12d.

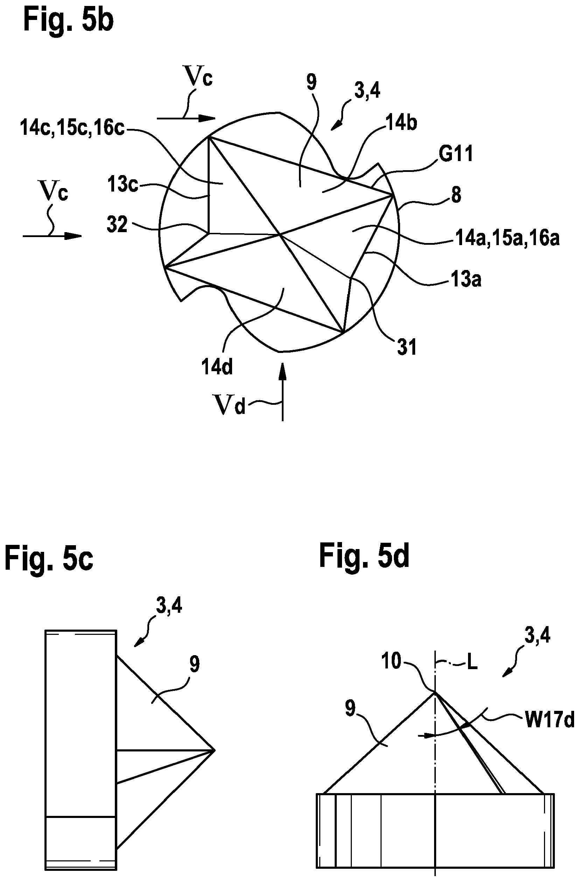

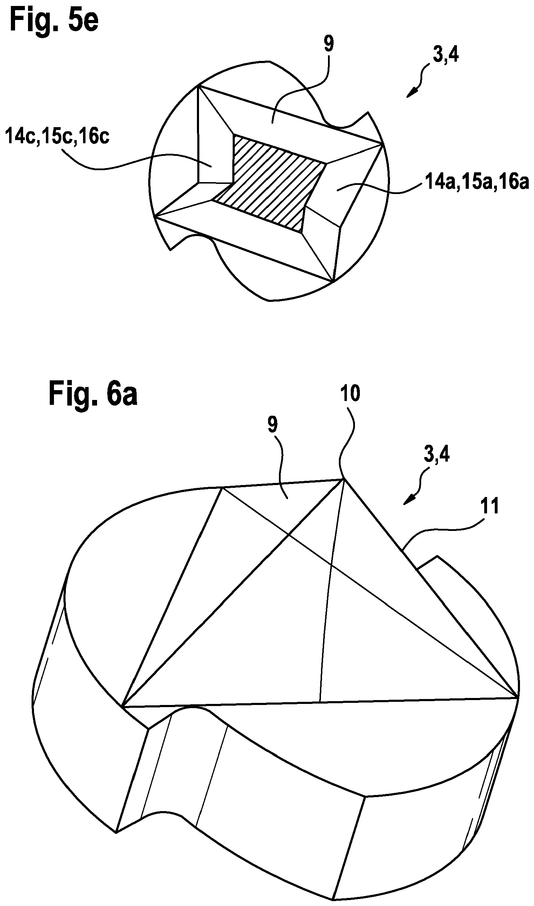

Der in den Figuren 5a bis 5e gezeigte Schneidkörper 3 weist als Kopfbereich 9 eine Pyramide 11 mit einer Grundfläche G11 auf, welche als Viereck ausgebildet ist. Von vier Seitenflächen 14a bis 14d sind zwei gegenüberliegende Seitenflächen 14a und 14c mit Wölbungen 15a und 15c in Form von Mulden 16a und 16c ausgebildet. Hierbei sind die Seitenflächen 14a und 14c so stark in Richtung eine Schwerpunkts S des Kopfbereichs 9 des Schneidkörpers 3 gewölbt bzw. eingeknickt, dass Grundkanten 13a und 13c, welche auf einem Sockelbereich 8 des Schneidkörpers 3 verlaufen, jeweils einen Knick 31 bzw. 32 aufweisen. Im Vergleich der Schnittdarstellungen in den Figuren 5e und 3e bzw. der Seitenansichten 5d und 3d ist erkennbar, dass die Seitenflächen 14a und 14c zu der Spitze 10 mit einem größeren Winkel W17d zu der Längsachse L verlaufen als dies bei der Ausführungsvariante der Figuren 3a bis 3e der Fall ist.

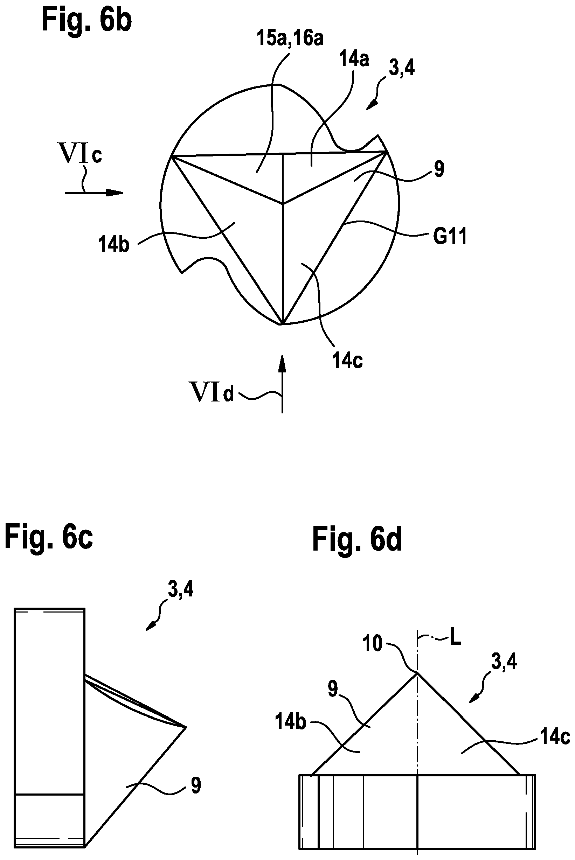

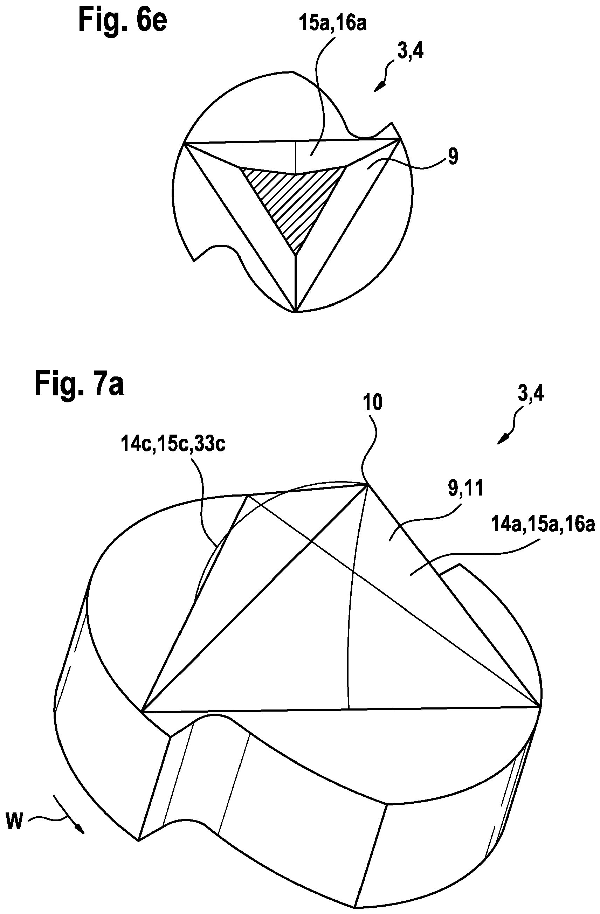

Der in den Figuren 6a bis 6e gezeigte Schneidkörper 3 weist als Kopfbereich 9 eine Pyramide 11 mit einer Grundfläche G11 auf, welche als Dreieck ausgebildet ist. Von drei Seitenflächen 14a bis 14c ist die Seitenfläche 14a mit einer Wölbungen 15a in Form einer Mulde 16a ausgebildet.

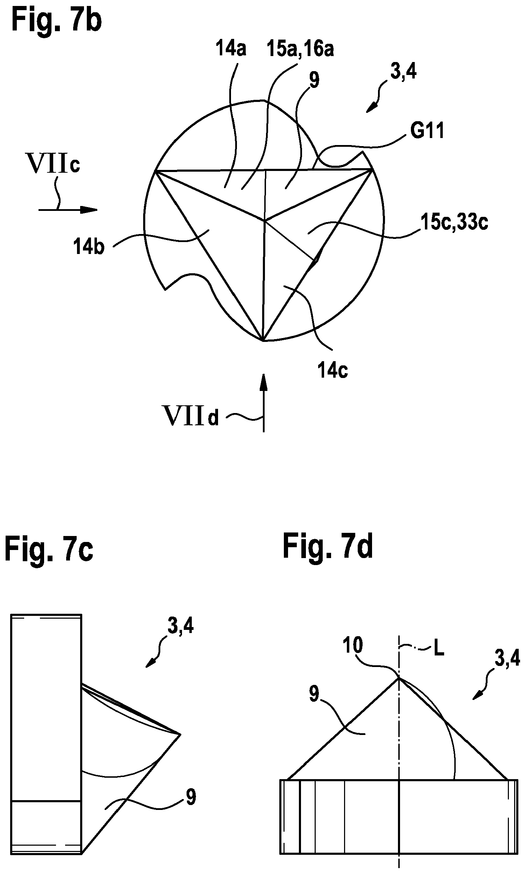

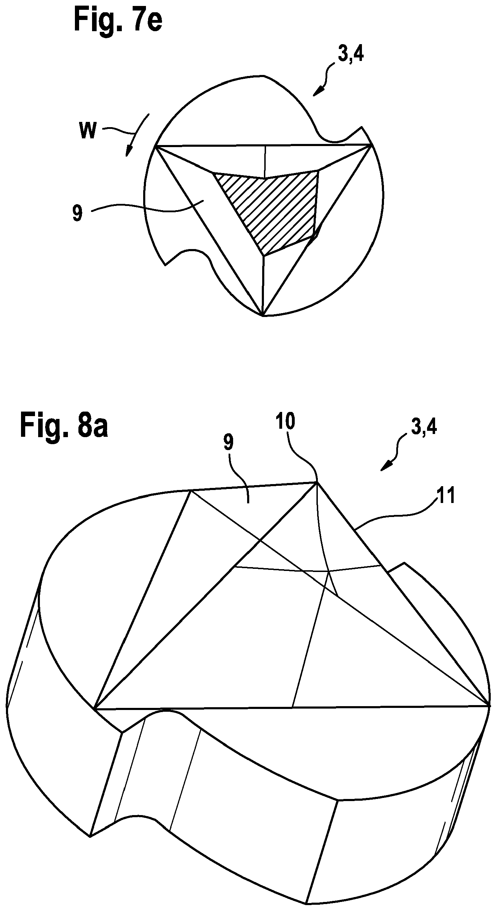

Der in den Figuren 7a bis 7e gezeigte Schneidkörper 3 weist als Kopfbereich 9 ebenfalls eine Pyramide 11 mit einer Grundfläche G11 auf, welche als Dreieck ausgebildet ist. Von drei Seitenflächen 14a bis 14c ist die Seitenfläche 14a mit einer Wölbungen 15a in Form einer Mulde 16a ausgebildet. Die Seitenfläche 14c ist ebenfalls als Wölbung 15c, jedoch in Form eine Nase 33c ausgebildet und bildet einen konvexen Vorsprung gegenüber einer gedachten ebenen Seitenfläche. In Drehrichtung w des Scheidkörpers 3 folgt die Nase 33c unmittelbar auf die Mulde 16a. Ein Gesteinsbohrwerkzeug mit einem derartigen Schneidkörper 3 weist somit als Kopfbereich 9 eine Pyramide 11 mit dreieckiger Grundfläche G11 auf, wobei die drei Seitenflächen 14a, 14b, 14c der Pyramide 11 jeweils unterschiedlich als Mulde 16a als ebene Seitenfläche 14b und als Nase 33c ausgebildet sind und wobei die Mulde 16a in Drehrichtung der Nase 33c unmittelbar voraneilt. Bei einem derartigen Gesteinsbohrwerkzeug wird bei jeder Umdrehung zunächst vorrangig abgeschält und dann vorrangig zertrümmert. Hierdurch wird vermieden, dass die Schlagenergie durch angesammeltes Bohrklein gedämpft wird.

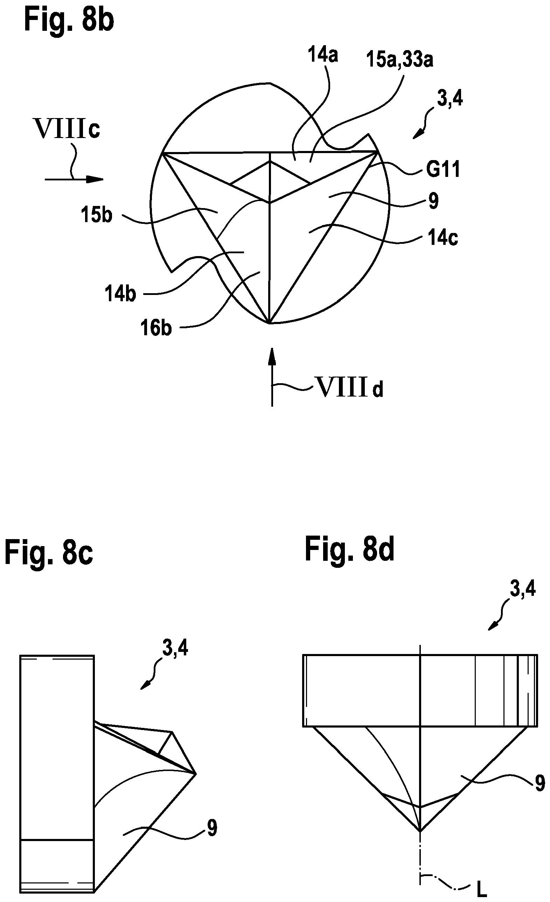

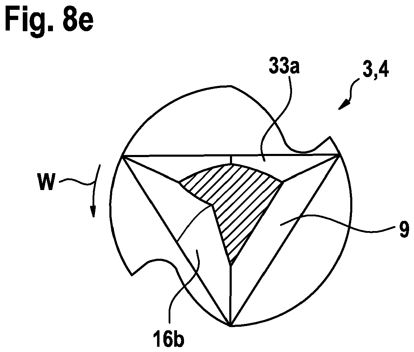

Der in den Figuren 8a bis 8e gezeigte Schneidkörper 3 weist als Kopfbereich 9 ebenfalls eine Pyramide 11 mit einer Grundfläche G11 auf, welche als Dreieck ausgebildet ist. Von drei Seitenflächen 14a bis 14c ist die Seitenfläche 14b mit einer Wölbungen 15b in Form einer Mulde 16b ausgebildet. Die Seitenfläche 14a ist als Wölbung 15a in Form eine Nase 33a ausgebildet und bildet einen konvexen Vorsprung gegenüber einer gedachten ebenen Seitenfläche. In Drehrichtung w des Scheidkörpers 3 folgt die Nase 33a unmittelbar auf die Mulde 16b.

## Patentansprüche

1. Gesteinsbohrwerkzeug (1) zur dreh-schlagenden Bearbeitung von Beton, Gestein, Mauerwerk und dergleichen Materialien umfassend
- einen Bohrerkopf (2), welcher einen Schneidkörper (3) umfasst,
- eine zwischen dem Bohrerkopf (2) und einem Schaft (6) angeordnete Wendel (5),
- wobei sich der Schneidkörper (3) ununterbrochen über einen Nenndurchmesser (N) des Gesteinsbohrwerkzeugs (1) erstreckt,
- wobei der Schneidkörper (3), in Wirkrichtung (W) des Gesteinsbohrwerkzeugs (1) betrachtet, einen unteren Sockelbereich (8) und einen oberen Kopfbereich (9) umfasst,
- wobei sich der Kopfbereich (9) über den Nenndurchmesser (N) des Gesteinsbohrwerkzeugs (1) erstreckt,
- und wobei eine Spitze (10) des Schneidkörpers (3) von einer Längsmittelachse (L) des Bohrwerkzeugs (1) durchlaufen wird,
**dadurch gekennzeichnet,**
- **dass** der Schneidkörper (3) in seinem Kopfbereich (9) als Pyramide (11) oder als Pyramidenstumpf ausgebildet ist, deren bzw. dessen Grundfläche (G11 ) sich über den Nenndurchmesser (N) des Gesteinsbohrwerkzeugs (1) erstreckt, und Pyramidenkanten (12a - 12f) aufweist, welche von der Grundfläche (G11 ) zu einer Spitze (10) der Pyramide (11) bzw. des Pyramidenstumpfs verlaufen,
- wobei zwischen den Pyramidenkanten (12a - 12f) Seitenflächen (14a - 14f) liegen
- und **dadurch gekennzeichnet, dass** wenigstens eine Seitenfläche (14a - 14f) als Wölbung (15a - 15f) ausgebildet ist.

2. Gesteinsbohrwerkzeug nach Anspruch 1, **dadurch gekennzeichnet, dass** die Wölbung (15a - 15f) insbesondere als konkave Mulde (16a - 16f) ausgebildet ist oder dass die Wölbung (15a - 15f) insbesondere als konvexe Nase (33a, 33c) ausgebildet ist.

3. Gesteinsbohrwerkzeug nach Anspruch 2, **dadurch gekennzeichnet, dass** wenigstens zwei benachbarte Seitenflächen (14a - 14f) des Kopfbereichs (9) insbesondere als Mulden (16a - 16f) ausgebildet sind oder insbesondere als Nasen (33a, 33c) ausgebildet sind oder insbesondere als Nase (33a, 33c) und Mulde (16a - 16f) ausgebildet sind.

4. Gesteinsbohrwerkzeug nach Anspruch 2, **dadurch gekennzeichnet, dass** alle Seitenflächen (14a - 14f) des Kopfbereichs (9) insbesondere als Mulden (16a - 16f) ausgebildet sind oder insbesondere als Nasen (33a, 33c) ausgebildet sind oder insbesondere abwechselnd als Nase (33a, 33c) und Mulde (16a - 16f) ausgebildet sind.

5. Gesteinsbohrwerkzeug nach Anspruch 3 oder 4, **dadurch gekennzeichnet, dass** im Bereich der zwischen zwei Mulden (16a - 16f) liegenden Pyramidenkante (12a - 12f) des Kopfbereichs (9) ein Keil (23) gebildet wird, dessen Keilflächen (23a, 23b) durch Oberflächenabschnitte der benachbarten Mulden (16a - 16f) gebildet sind, wobei ein Keilwinkel (KW1) des Keils (23) kleiner ist als ein Keilwinkel (KW2) eines Kopfbereichs (9) mit ebenen Seitenflächen (18a - 18f).

6. Gesteinsbohrwerkzeug nach einem der vorhergehenden Ansprüche, **dadurch gekennzeichnet, dass** eine in Drehrichtung (w) des Gesteinsbohrwerkzeugs (1) vor der Pyramidenkante (12a - 12f) liegende Mulde (16a - 16f) als Spanflächenmulde (26a, 26d) ausgebildet ist, wobei eine in Drehrichtung (w) des Gesteinsbohrwerkzeugs (1) hinter der Pyramidenkante (12a - 12f) liegende Mulde (16a - 16f) als Freiflächenmulde (27d) ausgebildet ist und wobei die Spanflächenmulde (26a, 26d) zu der Pyramidenkante (12a - 12f) hin stärker ansteigt als die Freiflächenmulde (27d).

7. Gesteinsbohrwerkzeug nach einem der vorhergehenden Ansprüche, **dadurch gekennzeichnet, dass** eine Grundfläche (G11 ) der Pyramide (11) insbesondere als Vieleck mit einer geraden Eckenzahl und insbesondere als Viereck oder als Sechseck ausgebildet ist oder insbesondere als Vieleck mit einer ungeraden Eckenzahl und insbesondere als Dreieck oder Fünfeck ausgebildet ist.

8. Gesteinsbohrwerkzeug nach einem der vorhergehenden Ansprüche, **dadurch gekennzeichnet, dass** sich wenigstens eine der Mulden (16a - 16f) in Richtung eines Schwerpunkts (S) des Kopfbereichs (9) des Schneidkörpers (3) vertieft.

9. Gesteinsbohrwerkzeug nach einem der vorhergehenden Ansprüche, **dadurch gekennzeichnet, dass** der Schneidkörper (3) insbesondere als Schneidplatte ausgebildet ist, welche sich über den Nenndurchmesser (N) des Gesteinsbohrwerkzeugs (1) erstreckt, oder dass der Schneidkörper (3) insbesondere als Vollhartmetallkopf (4) ausgebildet ist, welcher sich über den Nenndurchmesser (N) des Gesteinsbohrwerkzeugs (1) erstreckt.

10. Gesteinsbohrwerkzeug nach einem der vorhergehenden Ansprüche, **dadurch gekennzeichnet, dass** wenigstens eine der Pyramidenkanten (12a - 12f) zwischen ihrem Fußpunkt (F12a - F12f) und der Spitze (10) der Pyramide (11) bzw. des Pyramidenstumpfs auf wenigstens einem Abschnitt bei gleich bleibender Steigung zu der Längsachse (L) insbesondere gebogen und/oder insbesondere geknickt verläuft.

11. Gesteinsbohrwerkzeug nach einem der vorhergehenden Ansprüche, **dadurch gekennzeichnet, dass** wenigstens eine der Pyramidenkanten (12a - 12f) zwischen ihrem Fußpunkt (F12a - F12f) und der Spitze (10) der Pyramide (11) bzw. des Pyramidenstumpfs auf wenigstens einem Abschnitt insbesondere mit zunehmender Steigung zu der Längsachse (L) oder insbesondere mit abnehmender Steigung zu der Längsachse (L) oder insbesondere mit sprunghafter Änderung der Steigung zu der Längsachse (L) verläuft.

## Claims

1. Rock drilling tool (1) for the rotational percussive machining of concrete, rock, masonry and such materials, comprising
- a drill head (2), which comprises a cutting body (3),
- a helix (5) arranged between the drill head (2) and a shaft (6),
- the cutting body (3) extending uninterruptedly over a nominal diameter (N) of the rock drilling tool (1),
- the cutting body (3), viewed in the active direction (W) of the rock drilling tool (1), comprising a lower base region (8) and an upper head region (9),
- the head region (9) extending over the nominal diameter (N) of the rock drilling tool (1),
- and a longitudinal mid-axis (L) of the drilling tool (1) running through a tip (10) of the cutting body (3),
**characterized in that**
- the cutting body (3) is formed in its head region (9) as a pyramid (11) or as a truncated pyramid, the base surface (G11) of which extends over the nominal diameter (N) of the rock drilling tool (1), and has pyramid edges (12a - 12f) which extend from the base surface (G11) to a tip (10) of the pyramid (11) or the truncated pyramid,
- wherein side surfaces (14a - 14f) are located between the pyramid edges (12a - 12f),
- and **characterized in that** at least one side surface (14a - 14f) is formed as a curvature (15a - 15f).

2. Rock drilling tool according to Claim 1, **characterized in that** the curvature (15a - 15f) is in particular formed as a concave trough (16a - 16f), or **in that** the curvature (15a - 15f) is formed in particular as a convex nose (33a, 33c).

3. Rock drilling tool according to Claim 2, **characterized in that** at least two adjacent side surfaces (14a - 14f) of the head region (9) are in particular formed as troughs (16a - 16f) or in particular as noses (33a, 33c) or in particular as a nose (33a, 33c) and trough (16a - 16f).

4. Rock drilling tool according to Claim 2, **characterized in that** all side surfaces (14a - 14f) of the head region (9) are in particular formed as troughs (16a - 16f) or in particular as noses (33a, 33c) or in particular formed alternately as a nose (33a, 33c) and trough (16a - 16f).

5. Rock drilling tool according to Claim 3 or 4, **characterized in that**, in the region of the pyramid edge (12a - 12f) of the head region (9) that is located between two troughs (16a - 16f), a wedge (23) is formed, the wedge surfaces (23a, 23b) of which are formed by surface sections of the adjacent troughs (16a - 16f), wherein a wedge angle (KW1) of the wedge (23) is smaller than a wedge angle (KW2) of a head region (9) having flat side surfaces (18a - 18f).

6. Rock drilling tool according to one of the preceding claims, **characterized in that** a trough (16a - 16f) located before the pyramid edge (12a - 12f) in the direction of rotation (w) of the rock drilling tool (1) is formed as a rake face trough (26a, 26d), wherein a trough (16a - 16f) located after the pyramid edge (12a - 12f) in the direction of rotation (w) of the rock drilling tool (1) is formed as a flank face trough (27d), and wherein the rake face trough (26a, 26d) rises more sharply toward the pyramid edge (12a - 12f) than the flank face trough (27d).

7. Rock drilling tool according to one of the preceding claims, **characterized in that** a base surface (G11) of the pyramid (11) is in particular formed as a polygon with an even number of corners and in particular as a square or as a hexagon, or in particular is formed as a polygon with an odd number of corners and in particular as a triangle or pentagon.

8. Rock drilling tool according to one of the preceding claims, **characterized in that** at least one of the troughs (16a - 16f) deepens in the direction of a centre of gravity (S) of the head region (9) of the cutting body (3).

9. Rock drilling tool according to one of the preceding claims, **characterized in that** the cutting body (3) is in particular formed as a cutting plate which extends over the nominal diameter (N) of the rock drilling tool (1), or **in that** the cutting body (3) is in particular formed as a solid hard metal head (4) which extends over the nominal diameter (N) of the rock drilling tool (1).

10. Rock drilling tool according to one of the preceding claims, **characterized in that**, between its foot point (F12a - F12f) and the tip (10) of the pyramid (11) or the truncated pyramid, at least one of the pyramid edges (12a - 12f) extends in particular in a curved and/or in particular in a bent manner having a constant slope relative to the longitudinal axis (L) over at least one section.

11. Rock drilling tool according to one of the preceding claims, **characterized in that**, between its foot point (F12a - F12f) and the tip (10) of the pyramid (11) or the truncated pyramid, at least one of the pyramid edges (12a - 12f) extends in particular with an increasing slope relative to the longitudinal axis (L) or in particular with a decreasing slope relative to the longitudinal axis (L) or in particular with an abrupt change in the slope relative to the longitudinal axis (L) over at least one section.

## Revendications

1. Outil perforateur de roche (1) pour la perforation roto-percutante de béton, de roche, de maçonnerie et de matériaux équivalents, comprenant
- une tête de foret (2), qui comprend un corps de coupe (3),
- une hélice (5) disposée entre la tête de foret (2) et une tige (6),
- dans lequel le corps de coupe (3) s'étend de façon ininterrompue sur un diamètre nominal (N) de l'outil perforateur de roche (1),
- dans lequel le corps de coupe (3), considéré dans la direction de travail (W) de l'outil perforateur de roche (1), comprend une zone de socle inférieure (8) et une zone de tête supérieure (9),
- dans lequel la zone de tête (9) s'étend sur le diamètre nominal (N) de l'outil perforateur de roche (1), et
- dans lequel une pointe (10) du corps de coupe (3) est traversée par un axe central longitudinal (L) de l'outil perforateur de roche (1),
**caractérisé en ce que**
- le corps de coupe (3) est réalisé dans sa zone de tête (9) en forme de pyramide (11) ou de tronc de pyramide, dont la face de base (G11) s'étend sur le diamètre nominal (N) de l'outil perforateur de roche (1), et présente des arêtes de pyramide (12a - 12f), qui courent de la face de base (G11) à une pointe (10) de la pyramide (11) ou du tronc de pyramide,
- dans lequel des faces latérales (14a - 14f) sont situées entre les arêtes de pyramide (12a - 12f), et **caractérisé en ce qu'**au moins une face latérale (14a - 14f) est réalisée sous forme bombée (15a - 15f).

2. Outil perforateur de roche selon la revendication 1, **caractérisé en ce que** la courbure (15a - 15f) est réalisée en particulier en forme de cuvette concave (16a - 16f) ou **en ce que** la courbure (15a - 15f) est réalisée en particulier en forme de nez convexe (33a, 33c).

3. Outil perforateur de roche selon la revendication 2, **caractérisé en ce qu'**au moins deux faces latérales voisines (14a - 14f) de la zone de tête (9) sont réalisées en particulier en forme de cuvettes (16a - 16f) ou sont réalisées en particulier en forme de nez (33a, 33c) ou sont réalisées en particulier en forme de nez (33a, 33c) et de cuvettes (16a - 16f).

4. Outil perforateur de roche selon la revendication 2, **caractérisé en ce que** toutes les faces latérales (14a - 14f) de la zone de tête (9) sont réalisées en particulier en forme de cuvettes (16a - 16f) ou sont réalisées en particulier en forme de nez (33a, 33c) ou sont réalisées en particulier en forme de nez (33a, 33c) et de cuvettes (16a - 16f).

5. Outil perforateur de roche selon la revendication 3 ou 4, **caractérisé en ce qu'**un coin (23) est formé dans la région de l'arête de pyramide (12a - 12f) de la zone de tête (9) située entre deux cuvettes (16a - 16f), dont les faces de coin (23a, 23b) sont formées par des parties de surface des cuvettes voisines (16a - 16f), dans lequel un angle de coin (KW1) du coin (23) est plus petit qu'un angle de coin (KW2) d'une zone de tête (9) avec des faces latérales planes (18a - 18f).

6. Outil perforateur de roche selon l'une quelconque des revendications précédentes, **caractérisé en ce qu'**une cuvette (16a - 16f) située avant l'arête de pyramide (12a - 12f) dans le sens de rotation (w) de l'outil perforateur de roche (1) est réalisée en forme de cuvette à face de coupe (26a, 26d), dans lequel une cuvette (16a - 16f) située derrière l'arête de pyramide (12a - 12f) dans le sens de rotation (w) de l'outil perforateur de roche (1) est réalisée en forme de cuvette à face libre (27d) et dans lequel la cuvette à face de coupe (26a, 26d) monte plus fortement vers l'arête de pyramide (12a - 12f) que la cuvette à face libre (27d).

7. Outil perforateur de roche selon l'une quelconque des revendications précédentes, **caractérisé en ce qu'**une face de base (G11) de la pyramide (11) est réalisée en particulier en forme de polygone avec un nombre pair de sommets et en particulier en forme de carré ou d'hexagone ou est réalisée en particulier en forme de polygone avec un nombre impair de sommets et en particulier en forme de triangle ou de pentagone.

8. Outil perforateur de roche selon l'une quelconque des revendications précédentes, **caractérisé en ce qu'**au moins une des cuvettes (16a - 16f) s'approfondit en direction d'un centre de gravité (S) de la zone de tête (9) du corps de coupe (3).

9. Outil perforateur de roche selon l'une quelconque des revendications précédentes, **caractérisé en ce que** le corps de coupe (3) est réalisé en particulier en forme de plaquette de coupe, qui s'étend sur le diamètre nominal (N) de l'outil perforateur de roche (1), ou **en ce que** le corps de coupe (3) est réalisé en particulier en forme de tête en métal dur massif (4), qui s'étend sur le diamètre nominal (N) de l'outil perforateur de roche (1).

10. Outil perforateur de roche selon l'une quelconque des revendications précédentes, **caractérisé en ce qu'**au moins une des arêtes de pyramide (12a - 12f) court en particulier sous forme incurvée ou coudée entre son pied (F12a - F12f) et la pointe (10) de la pyramide (11) ou du tronc de pyramide sur au moins une partie avec une pente restant constante par rapport à l'axe longitudinal (L).

11. Outil perforateur de roche selon l'une quelconque des revendications précédentes, **caractérisé en ce qu'**au moins une des arêtes de pyramide (12a - 12f) court entre son pied (F12a - F12f) et la pointe (10) de la pyramide (11) ou du tronc de pyramide sur au moins une partie en particulier avec une pente croissante par rapport à l'axe longitudinal (L) ou en particulier avec une pente décroissante par rapport à l'axe longitudinal (L) ou en particulier avec une variation brusque de la pente par rapport à l'axe longitudinal (L).
